# EUROPEAN PATENT APPLICATION

(11) **EP 1 528 733 A2**
(43) Date of publication of application: **04.05.2005**
(21) Application number: 04256557.2
(22) Date of filing: 23.10.2004
(51) Int. Cl.: H04L 12/56, H04L 12/28

(54) **Method for exchanging data between devices on a wireless personal area network (WPAN)**

(30) Priority: 29.10.2003 KR 2003076034; 29.06.2004 KR 2004049655
(71) Applicant: Samsung Electronics Co., Ltd., Suwon-si, Gyeonggi-do (KR)
(72) Inventor: Sung, Hyun-ah, Seoul (KR); Bae, Dae-gyu 202-201 Woncheon Jugong 2-danji Apt., Suwon-si, Gyeonggi-do (KR); Hong, Jin-woo, Seoul (KR)
(74) Representative: Robinson, Ian Michael

(57) **Abstract**

The present invention relates to a method and an apparatus for bi-directionally exchanging data within an allocated channel time by improving the MAC (Media Access Control) of devices operating on a wireless PAN (Personal Area Network). The method of the present invention comprises the steps of (1) generating a channel time request frame (100) containing directional information (110) to determine whether data transmission is unidirectional or bi-directional, and transmitting the channel time request frame (100) to a device responsible for channel time allocation; (2) generating a frame (200) containing channel time allocation information (210) including the directional information (110) based on the information contained in the channel time request frame (100), and broadcasting the generated frame; and (3) exchanging data between first and second devices, which are designated as source and destination devices in the frame (200) containing the channel time allocation information (210), during a predetermined channel time in accordance with the directional information (110).

## Description

The present invention relates to a method and an apparatus for performing effective communication between devices on a wireless network, and more particularly, to a method and an apparatus for bi-directionally exchanging data during the period of an allocated channel time by improving the MAC (Media Access Control) of devices operating on a wireless PAN (Personal Area Network).

UWB (Ultra Wideband), which is also known as *digital pulse wireless,* has been developed by U.S. Department of Defense for military purposes, and is a wireless technology for transmitting large amount of digital data over a wide spectrum of frequency bands with low power within a short distance. Standardization of UWB is currently being carried out by a Working Group that establishes the IEEE 802.15.3, i.e. wireless PAN standards. The IEEE 802.15.3 deals with PHY (physical layer) and MAC. Recently, research studies for improving the MAC have been active in the field of radio technology.

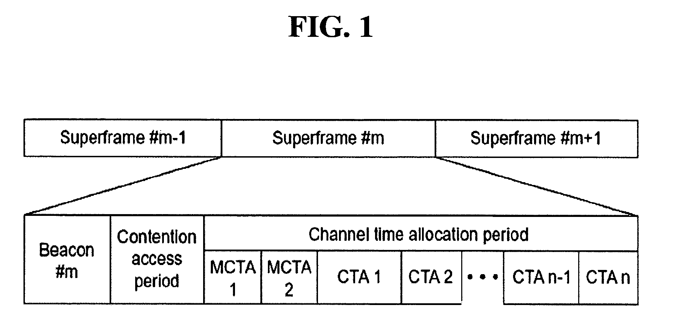

802.15.3 MAC is characterized by a rapidly established wireless network. Further, 802.15.3 MAC is not based on an AP (Access Point) but rather on an Ad Hoc Network called a Piconet controlled by a PNC (Piconet Coordinator). The 802.15.3 MAC adopts a TDMA (Time Division Multiple Access) system. A MAC frame for exchanging data between devices is embodied in a temporal structure called a superframe as shown in Figure 1. The superframe is composed of a beacon containing control information, a CAP (Contention Access Period) for transmitting data through backoff, and CTAP (Channel Time Allocation Period) for transmitting data without contention within the allocated time. Among them, CAP can be replaced by MCTA (Management CTA). Currently, competitive access can be made in CAP through a CSMA/CA (Carrier Sense Multiple Access/Collision Avoidance) system and a channel can be accessed in MCTA through a slotted Aloha method.

CTAP can comprise a plurality of MCTA blocks and a plurality of CTA blocks. CTA (Channel Time Allocation) is classified into two types: i.e., a dynamic CTA and a pseudo-static CTA. The dynamic CTA can be changed in position in each superframe, but cannot be used in a relevant superframe if the beacon of a superframe is lost. On the other hand, the pseudo static CTA remains unchanged in the same fixed position, and can be used in the fixed position even if the beacon of a superframe is lost. However, the pseudo static CTA cannot be used if a beacon is continuously lost over the number of times corresponding to mMaxLostBeacons. Therefore, since the 802.15.3 MAC is based on the TDMA system capable of ensuring QoS (Quality of Service), it is particularly suitable for multimedia audio/video (A/V) streaming on a home network. Nevertheless, MAC should be still further improved to effectively utilize throughput as well as QoS.

There are two data transmission schemes in 802.15.3 MAC: i.e., an isochronous data transmission scheme and an asynchronous data transmission scheme.

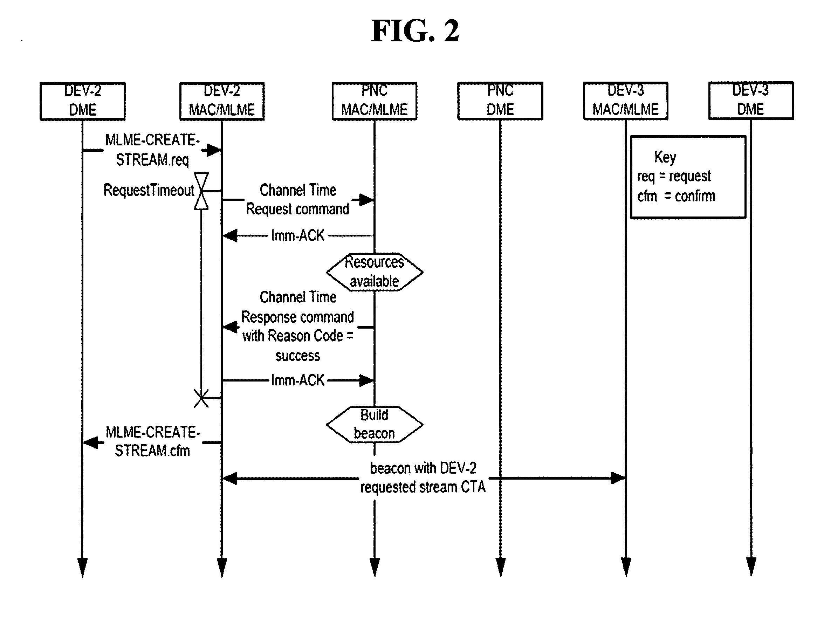

In the isochronous data transmission scheme, a channel time is first allocated from the PNC through a MAC sublayer Management Entity (MLME)-CREATE-STREAM.request. Then a MLME-CREATE-STREAM.confirm and data are actually transmitted during the allocated channel time through MAC-ISOCH-DATA.request and MAC-ISOCH-DATA.confirm, as shown in Figure 2. The allocated channel time can be obtained by analyzing the beacon, and a device constituting the piconet (hereinafter referred to as "DEV") can thus know the communication start time and communication end time based on the obtained channel time. At this instant, a source device (src DEV) and a destination device (dest DEV) are assigned for the allocated channel time. The device for transmitting data in the allocated channel time must be the src DEV, but the device for receiving the data is not necessarily the dest DEV specified in the CTA information. However, a device capable of receiving the data is a device in which an "Always AWAKE bit" or a "listen to source bit" is set to 1.

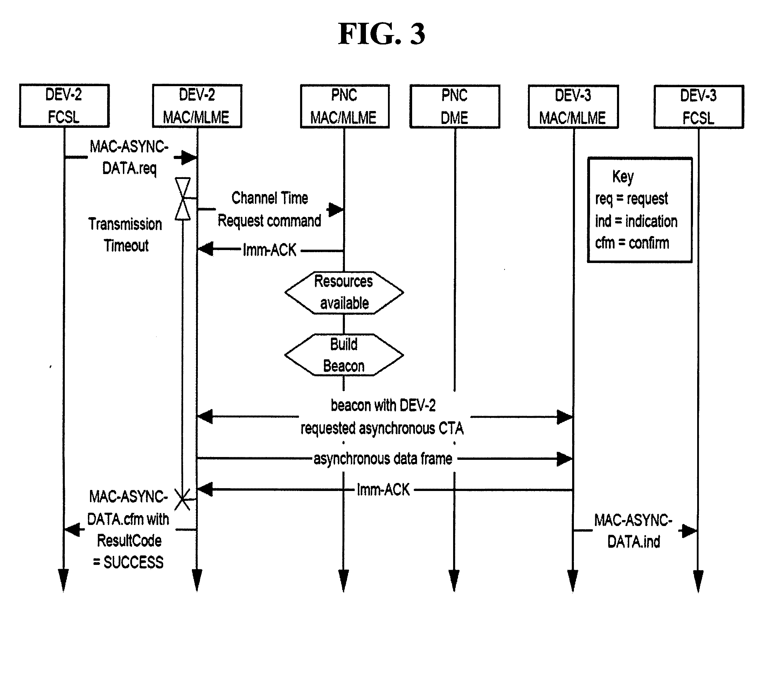

On the other hand, in the asynchronous data transmission scheme, the src DEV sends a channel time request command frame to the PNC when the data to be transmitted arrive at a MAC layer via MAC-ASYNC-DATA.request, as shown in Figure 3. Then, when the src DEV knows from the beacon that a requested channel time has been allocated, data are transmitted during the allocated channel time. Similar to the isochronous data transmission scheme, a pair of src DEV and dest DEV are assigned for the allocated channel time and only the assigned src DEV can transmit data during the allocated channel time. In addition, as an alternative method for sending asynchronous data, there is provided a method for sending frames using a backoff algorithm in the Contention Access Period (CAP).

To ensure the reliability of data transmission, TCP/IP is configured such that DEV1 transmits a frame to DEV2 and DEV2 returns an ACK frame (an ACK frame at the TCP/IP level, not an Imm-ACK frame as shown in Figures 2 and 3) to DEV1. A problem occurring when a data transmission mechanism provided by the 802.15.3 MAC is directly used in the TCP/IP having this mechanism will be described in detail as follows.

First, when TCP/IP data are isochronously transmitted, DEV1 will send DEV2 a frame for establishing a connection with DEV2. To this end, DEV1 first sends a PNC MLME-CREATE-STREAM.request to request channel time allocation in which the src DEV is DEV1 and the dest DEV is DEV2. When the PNC allocates channel time and sends a beacon containing information on the channel time, DEV1 reads information on the beacon and transmits the frame to DEV2 at the designated time. To send a response frame to the frame transmitted from DEV1, DEV2 requests channel time allocation in which the src DEV is DEV2 and the dest DEV is DEV1. Similarly, when the PNC allocates channel time and sends a beacon containing information on the channel time, DEV2 reads information on the beacon and transmits a response frame to DEV1 at the designated time. Since the channel time continues to be allocated until MLME-TERMINATE-STREAM.request is received, the data and ACK frame exchanged between DEV1 and DEV2 will be sent at the time allocated to the pair of src DEV and dest DEV according to the channel time information in the beacon. However, according to the characteristics of TCP/IP, until a sender receives an ACK frame after sending a data frame, the sender does not send other frames. Only the src DEV specified in the channel time allocation from the beacon can be a sender of the channel time in 802.15.3 MAC. Therefore, DEV2 should send an ACK frame at the TCP/IP level after the channel time in which the src DEV is DEV2. Consequently, although the time allocated to DEV1 and DEV2 is remaining after DEV1 sends data, DEV1 cannot receive an ACK frame from DEV2 during the time left, and thus, a waste of channel time occurs.

Second, a case where the TCP/IP frame is asynchronously transmitted will be discussed. When asynchronous data are sent to the Contention Access Period, the PNC may or may not allocate the CAP to a superframe. Furthermore, even though there is an allocated CAP, the method of sending the TCP/IP frame using the CAP does not ensure reliable transmission of the TCP/IP frame since the determination of whether the asynchronous data can be sent or not takes place during the period according to a criterion set by the PNC. Next, to send asynchronous data through channel time allocation, a MAC-ASYNCH-DATA.request should be used as described above. As shown in Figure 3, however, a data frame should be transmitted only after the channel time request command has been sent to the PNC and the channel time has been subsequently allocated. Such a successive transmission of data results in a waste of bandwidth. In addition, since it cannot be ensured that the requested channel time would be allocated even when the channel time allocation is requested, a device that attempts to transmit data should wait until at least the next superframe whenever each data frame is sent. Therefore, time delays will always occur.

The aforementioned problems may occur not only in TCP/IP but also when a protocol for exchanging data between two DEVs is executed in a higher layer of the 802.15.3 MAC.

The present invention is conceived to address the aforementioned and/or other problems of the prior art.

The present invention aims to achieve effective communication in a higher protocol by improving 802.15.3 MAC (Media Access Control). To this end, a method of using CTA in the bi-directional transmissions other than the unidirectional transmissions in 802.15.3 MAC will be presented.

According to the present invention there is provided an apparatus and method as set forth in the appended claims. Preferred features of the invention will be apparent from the dependent claims, and the description which follows.

According to one aspect of the present invention for achieving the objective, there is provided a method for exchanging data between devices on a wireless personal area network (PAN), comprising the steps of (1) generating a channel time request frame containing directional information to determine whether data transmission is unidirectional or bi-directional, and transmitting the channel time request frame to a device responsible for channel time allocation; (2) generating a frame containing channel time allocation information including the directional information based on the information contained in the channel time request frame, and broadcasting the generated frame; and (3) exchanging data between first and second devices, which are designated as source and destination devices in the frame containing the channel time allocation information, during a predetermined channel time in accordance with the directional information.

Preferably, but not necessarily, the channel time request frame is a channel time request command frame specified in IEEE 802.15.3.

Preferably, but not necessarily, the device responsible for the channel time allocation is a piconet coordinator (PNC) specified in IEEE 802.15.3.

Preferably, but not necessarily, the frame containing the channel time allocation information is a beacon frame specified in IEEE 802.15.3.

Further, the step (3) comprises the steps of transmitting data from the first device to the second device, and transmitting a NULL frame to the second device when the first device has no further data to transmit after the data transmission.

Preferably, but not necessarily, the method for exchanging data between devices on a PAN further comprises the steps of: if the second device that received the NULL frame has data to be transmitted to the first device, transmitting the data to the first device; and if the second device has no data, transmitting an ACK frame for the data transmitted by the first device.

Preferably, but not necessarily, the method for exchanging data between devices on PAN further comprises the steps of: if the first device that received the ACK frame has data to be transmitted to the second device, transmitting the data to the second device; and if the first device has no data, transmitting the NULL frame to the second device.

Preferably, but not necessarily, the ACK frame is an intermediate ACK frame in a MAC layer.

Preferably, but not necessarily, the NULL frame is composed of only a MAC header.

The above and other objects, features and advantages of the present invention will become apparent from the following description of preferred embodiments given in conjunction with the accompanying drawings, in which:
Figure 1 is a view showing the structure of a related art superframe;
Figure 2 is a view showing the process of requesting channel time allocation according to the prior art;
Figure 3 is a view showing the process of transmitting asynchronous data according to the prior art;
Figure 4 is a view showing the structure of a channel time request command frame according to the present invention;
Figure 5 is a view showing a structure of a beacon frame according to the present invention;
Figure 6 is a view showing a first exemplary embodiment where data are bi-directionally exchanged between devices within a given channel time;
Figure 7A is a view showing the structure of a NULL frame;
Figure 7B is a table according to a first exemplary embodiment showing frame type values in various kinds of frames;
Figure 8 is a flowchart illustrating the overall operation of a first exemplary embodiment;
Figure 9 is a view showing a second exemplary embodiment where data are bi-directionally exchanged between devices within a given channel time;
Figure 10A is a view showing the structure of a TOKEN frame;
Figure 10B is a table of a second exemplary embodiment showing frame type values in various kinds of frames;
Figure 11 is a flowchart illustrating the overall operation of a second exemplary embodiment of the present invention;
Figure 12 is a view showing a superframe structure and a data transmission process in a case where unidirectional transmission is made according to the prior art; and
Figure 13 is a view showing a superframe structure and a data transmission process in a case where bi-directional transmission is made according to the present invention.

Hereinafter, an exemplary embodiment of the present invention will be described in detail with reference to the accompanying drawings.

A channel time period where roles of two DEVs as a transmitting side and a receiving side are not fixed but dynamically exchanged is added, and a channel time is then requested of a PNC (piconet coordinator) when a protocol where the two DEVs should exchange data as in TCP/IP is executed in a higher MAC layer. The PNC that functions to provide a variety of services to DEVs in a piconet allocates the channel time, performs the synchronization between the DEVs and performs an association function of causing the DEVs to join the piconet, via a wireless communication medium.

For the exchange of data, a parameter of MLME-CREATE-STREAM.request provided by 802.15.3 MAC first needs to be modified. The following Table 1 shows the modified parameter of the MLME-CREATE-STREAM.request to which a new parameter of "DirectionType" was added. "DirectionType" defines directional information that is used to determine whether data transmission is unidirectional or bi-directional.

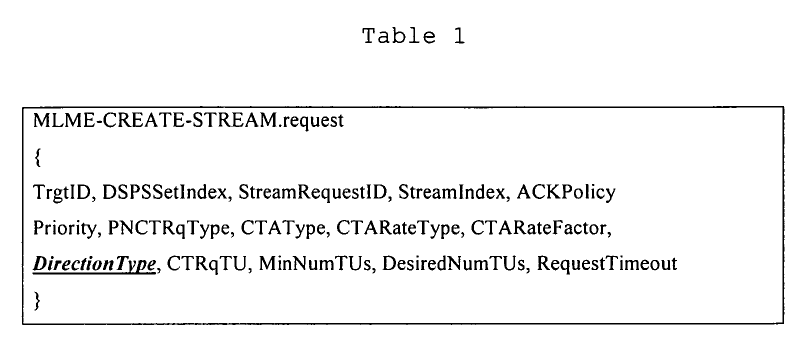

The parameter of "DirectionType" is defined as in the following Table 2.

**Table 2**

| Name | Type | Valid range | Description |
|---|---|---|---|
| Direction Type | Enumeration | ONE_WAY, TWO_WAY | Indicates whether only one DEV can become a src DEV capable of sending data (ONE_WAY) or both of two DEVs can become the src DEV (TWO_WAY). |

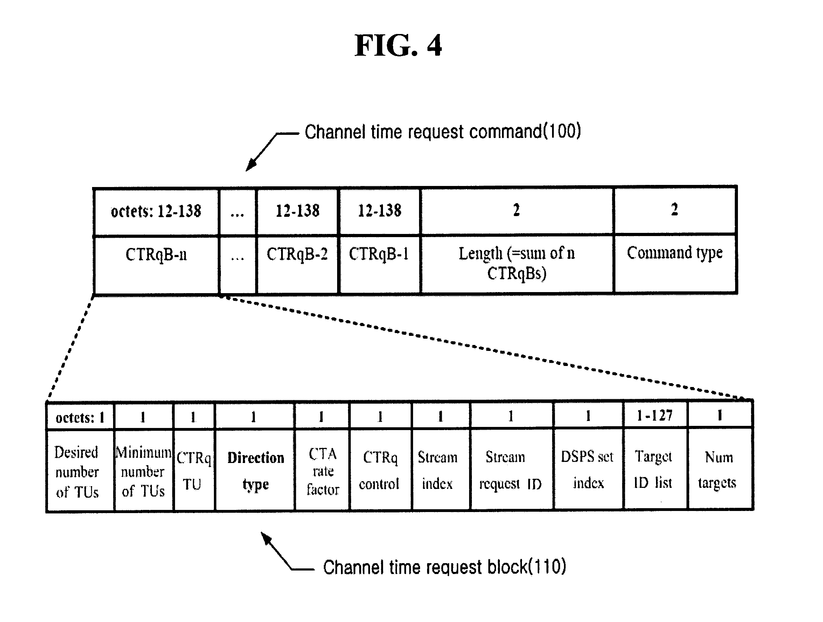

Assume that DEV1 sends data to DEV2 using the TCP/IP protocol. Firstly, DEV1 calls MLME-CREATE-STREAM.request to request a channel time from the PNC. At this time, "DirectionType" is set as "TWO_WAY". When MLME of the DEV1 receives the MLME-CREATE-STREAM.request, it sends the PNC a channel time request command 100 as shown in Figure 4. At this time, as illustrated in Table 1, a bit field for defining "DirectionType" is added to the channel time request block 110 constituting the channel time request command 100. Although the "DirectionType" field is allocated 1 octet, only 1-bit information is sufficient for this field because this field is "0" in the case of "ONE_WAY" and "1" in the case of "TWO_WAY". Thus, this field actually uses only 1 bit and the remaining 7 bits are reserved.

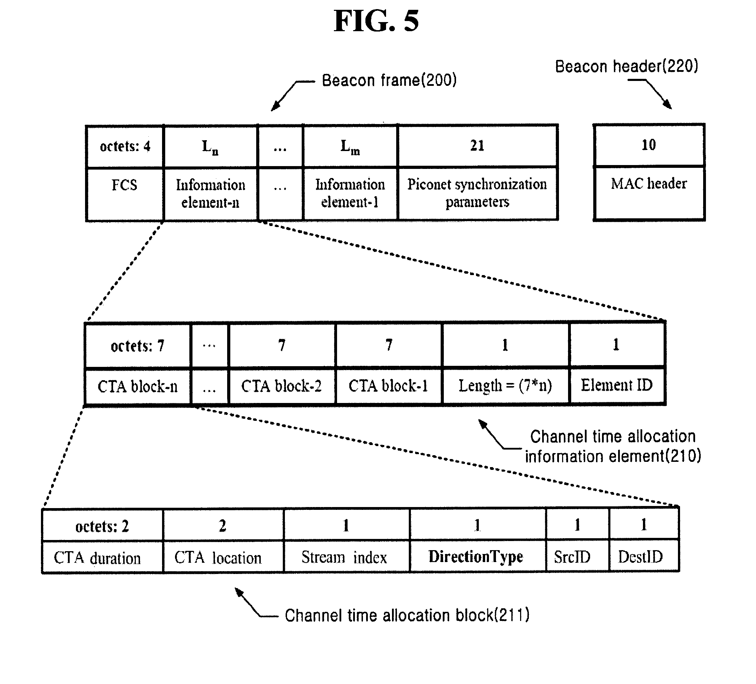

When resources of the communication medium are sufficient even after the PNC receives the channel time request command 100, the channel time is allocated to a relevant DEV via a beacon. Figure 5 shows the structure of a beacon frame 200, the structure of a "channel time allocation information element" field 210 of at least one "Information element' field in the beacon frame, and the structure of at least one "channel time allocation block" field 211 existing in the "channel time allocation information element" field 210. The "channel time allocation block" fields 211 is composed of a DestID field for indicating the ID of a receiving DEV, a SrcID field for indicating the ID of a transmitting DEV, a DirectionType field that is defined in the present invention so as to indicate whether the data transmission direction is ONE_WAY or TWO_WAY, a Stream index field for indicating the identity of a data stream to be transmitted, a CTA location field for indicating the location of CTA in the superframe, and a CTA duration field for indicating the duration of CTA.

During the channel time in which DirectionType is ONE_WAY, only a DEV that has been designated by SrcID, i.e. has sent the channel time request command 100 can be a sender. This is the same as in the existing 802.15.3. If the channel time in which DirectionType is TWO_WAY is allocated, both of two DEVs to which SrcID and DestID have been respectively assigned can be a sender to transmit desired data to the other DEV during the allocated channel time. The beacon includes a channel time allocation block 211 in which the DEV1 that has sent the channel time request command 100 is designated by SrcID and DEV2 which is designated by DestID. The DEV1 designated by SrcID will first become a sender based on the beacon information.

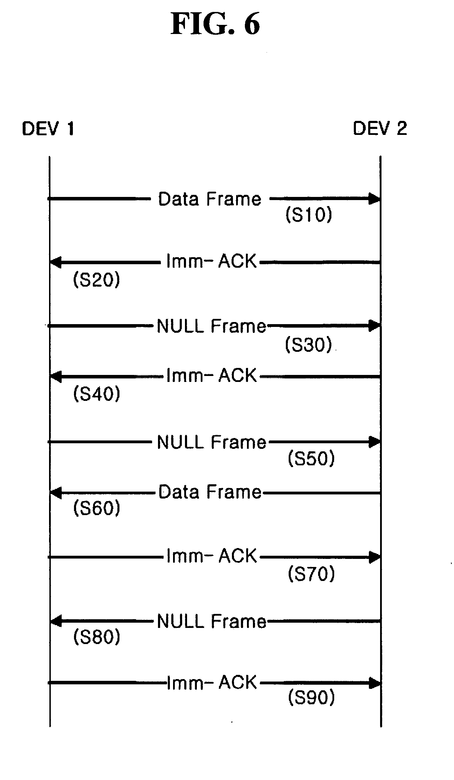

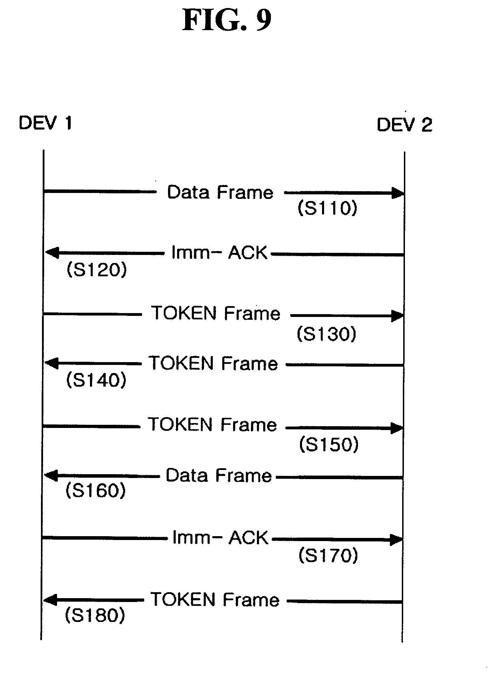

Hereinbelow, Figures 6 through 8 illustrate a first exemplary embodiment of the present invention and Figures 9 through 11 illustrate a second exemplary embodiment of the present invention.

In the first exemplary embodiment, a 'NULL' frame is transmitted when there remains no data to be transmitted by the src DEV and subsequently the dest DEV can transmit data. When there is no data to be transmitted although the dest DEV has received the NULL frame, it transmits again an Imm-ACK (Immediate ACK) to the src DEV, to thereby hand over an opportunity of transmitting the data again to the src DEV. Accordingly, the 'ACK-policy' of the NULL frame becomes 'Imm-ACK.'

In the second exemplary embodiment, the src DEV sends a 'TOKEN frame' when there remains no data to be transmitted. In response, the dest DEV can transmit data. When there is no data to be transmitted although the dest DEV has received the TOKEN frame, it transmits again a TOKEN frame to the src DEV, to thereby hand over an opportunity of transmitting the data again to the src DEV. Accordingly, the 'ACK-policy' of the TOKEN frame becomes 'No-ACK.'

The first exemplary embodiment of the present invention will be described with reference to Figures 6 through 8.

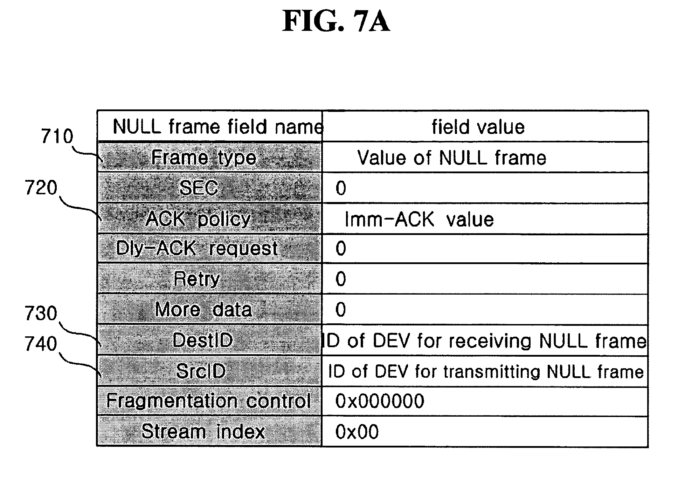

Figure 6 shows a process of exchanging data between DEV1 and DEV2 during the channel time in which DirectionType is TWO_WAY. After receiving from the beacon the channel time allocation block 211 in which DEV1 that has sent the channel time request command 100 is designated by SrcID and DEV2 is designated by DestID, DEV1 first becomes a sender and transmits data to DEV2 at the designated time (S10). DEV2 sends an ACK frame in accordance with the ACK policy of the data frame received from DEV1. An Imm-ACK (Immediate ACK) policy is assumed in this example (S20). If DEV1 has no data to be sent at this time, DEV1 transmits a NULL frame to DEV2 (S30). The NULL frame is a frame in which only a MAC header but no frame body portion is present, the structure of which is shown in Figure 7A. If there were some frames to be sent in step S30, data frames would be sent instead of a NULL frame. If DEV2 has no data frame to be sent at the time when a NULL frame is received, an Imm-ACK is immediately transmitted (S40). After receiving the Imm-ACK in response to the previously sent NULL frame, DEV1 transmits data to DEV2 if there are any data to be sent to DEV2, or transmits a NULL frame again to DEV2 if there are no data (S50). When DEV2 receives a NULL frame again and other data are then ready to be sent to DEV1, data frames, rather than an Imm-ACK are transmitted to DEV1 (S60). Since DEV1 did not receive an Imm-ACK frame but data frames in response to the previously sent NULL frame, DEV1 sends DEV2 an Imm-ACK in response to the received data frame (S70). If DEV2 that received the Imm-ACK has further data, DEV2 continuously sends data. Otherwise, DEV2 sends a NULL frame to DEV1 (S80). If DEV1 has no data frame to be sent at that time, it transmits an Imm-ACK to DEV2 (S90). The above process is repeated until the channel time allocated to the two DEVs ends.

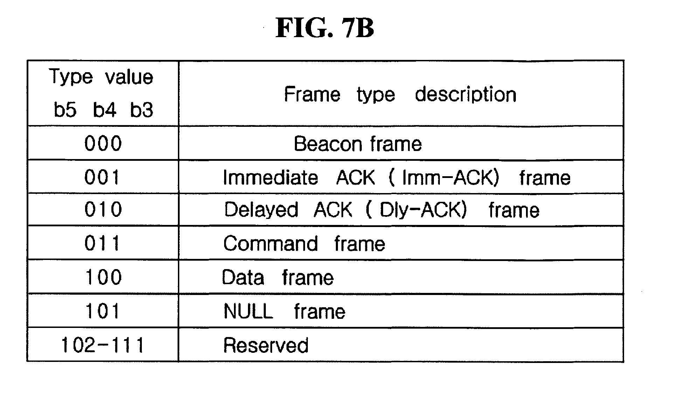

Figure 7A shows a detailed structure of the "NULL frame" proposed in the present invention. The NULL frame corresponds to a frame having only a MAC header and no frame body and has a size of 10 octets as in a conventional MAC header. Each field of the NULL frame has a size of 1 octet. Here, a Frame type field 710 is a field in which type values of the NULL frame are recorded. A table in which the type values of the various field frames are defined is shown in Figure 7B. These type values are recorded in b5, b4 and b3 bits of the MAC header and indicate what a relevant frame is according to the combination of the above bits. For example, "000" means a beacon frame and "001" means an Imm-ACK frame. Furthermore, a variety of type values such as a delayed ACK frame (value = "010"), a command frame (value = "011") and a data frame (value = "100") are specified in the existing IEEE 802.15.3. In the present invention, a new type value of NULL frame is added and specified as "101".

Referring again to Figure 7A, type values of the ACK frame according to the ACK policy are recorded in an ACK policy field 720. According to IEEE 802.15.3, the type values of the ACK frame are recorded in b8 and b7 bits of the MAC header, wherein "No ACK" has a value of "00", "Immediate ACK" has a value of "01" and "Delayed ACK" has a value of "10". Therefore, the ACK policy field has a value of "01" in this embodiment. Further, the ID of a DEV for transmitting a relevant NULL frame is recorded in a DestID field 730, and the ID of a DEV for receiving the relevant NULL frame is recorded in a SrcID field 740. Moreover, all field values of the MAC header become "0".

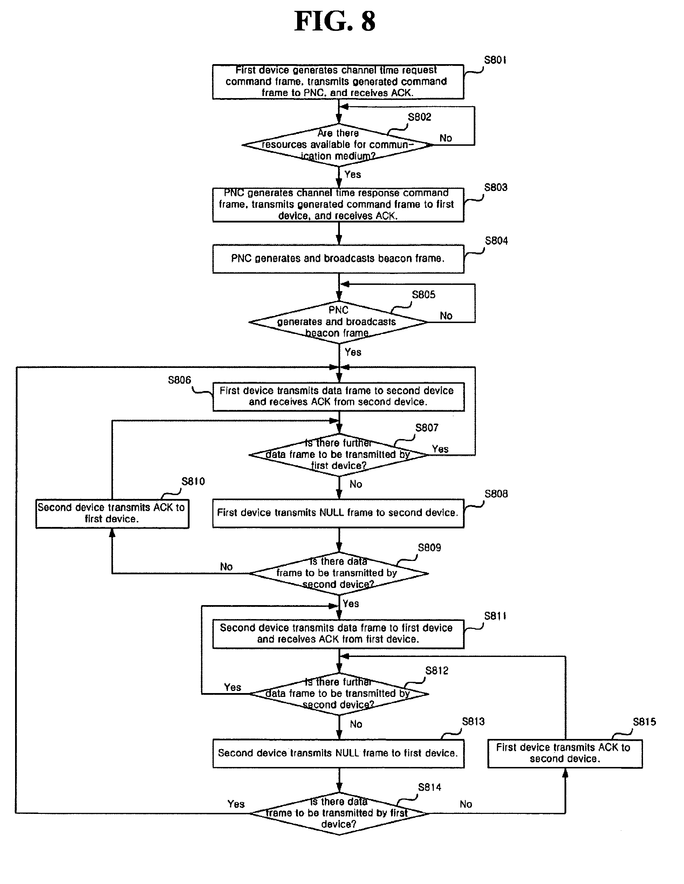

Figure 8 is a flowchart illustrating the overall operation of the present invention.

First, a first device generates a channel time request command frame, transmits the generated command frame to PNC, and receives an ACK for the transmitted command frame (S801). To this end, MLME-CREATE-STREAM.request is generated in DME (Device Management Entity) of the first device and then transmitted to MLME of the MAC. The MLME-CREATE-STREAM.request further includes a parameter of "DirectionType" in addition to the existing parameters, as defined in the above Table 1. The MLME generates a command frame used for requesting the channel time, i.e. a channel time request command frame, and then transmits the generated command frame to the PNC via a physical layer.

The PNC that received the command frame determines whether there are available resources in a current channel (wireless communication medium) (S802). If it is determined that there are no resources, a reason code of a channel time response command frame is properly expressed as "priority unsupported", "channel time unavailable", "unable to allocate as pseudo-static CTA" or the like, and the channel time response command frame is then transmitted to the first device. If it is determined that there are available resources, a command frame responding to the channel time request, i.e. the channel time response command frame with a reason code thereof expressed as "success", is transmitted to the first device and an Imm-ACK is then received from the first device (S803).

Next, the PNC generates a beacon frame based on information existing in the received channel time request command frame and then broadcasts the beacon frame to the DEVs that are members of the piconet (S804). The beacon frame includes information on channel time allocation, which in turn includes the duration of CTA, the location of CTA in a superframe, a stream index for data identification, the ID of the data transmitting device (the first device), the ID of the data receiving device (the second device), and a "DirectionType" for indicating whether the data transmission is unidirectional (ONE_WAY) or bi-directional (TWO_WAY). In this embodiment, the "DirectionType" is set to bi-directional, i.e. "1". The first and second devices that have received the beacon frame containing the DirectionType information can know that data are exchanged between them in a bidirectional manner.

Thereafter, when the start time of CTA at which the first and second devices can communicate with each other arrives ("Yes" in step S805), the first device transmits a data frame to the second device and then receives an Imm-ACK frame from the second device (S806). Since the data are segmented into unit frames having a length shorter than the maximum frame length and then transmitted, the data frame transmission procedure should be preformed twice or more so as to transmit data longer than the frame unit. Further, additional frame transmission procedures should be performed in order to transfer additional data after the above data have been fully transmitted.

If there are no data frames to be transmitted by the first device ("No" in step S807) after the aforementioned data transmission procedures, the first device sends the second device a NULL frame indicating that there are no further data to be transmitted (S808).

If the second device that received the NULL frame also has no data to be transmitted ("No" in step S809), the second device transmits an Imm-ACK to the first device (S810) and then returns to step S807. On the other hand, if there are any data ("Yes" in step S809), the second device transmits the data frames to the first device and receives an Imm-ACK from the first device (S811). Then, if there are further data to be transmitted by the second device ("Yes" in step S812), the data frame transmission step S811 is additionally performed. However, if there are no further data to be transmitted ("No" in step S812), the second device transmits a NULL frame to the first device (S813). Similarly, if the first device that received the NULL frame has data to be transmitted ("Yes" in step S814), the process returns to step S806. However, if there are no data, the first device transmits an Imm-ACK to the second device (S815) and the process then returns to step S812.

Steps S806 to S815 are performed from the start time to end time of the relevant CTA. Further, if the end time of CTA arrives during any of the above steps, the process of Figure 8 is terminated.

Hereinbelow, the second exemplary embodiment of the present invention will be described with reference to the accompanying Figure 9 to Figure 11.

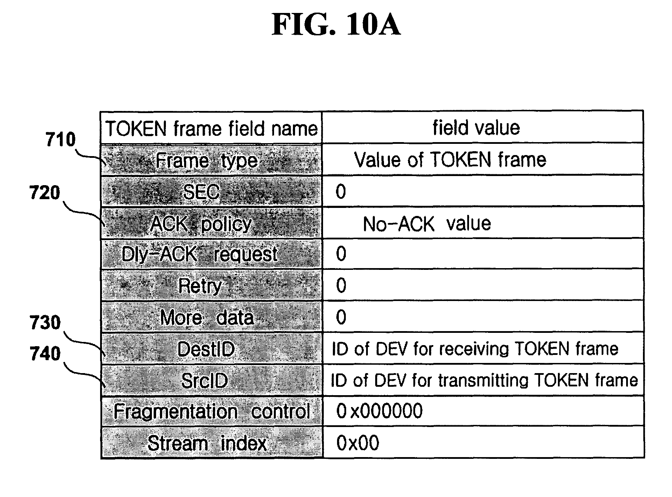

Figure 9 shows a process of exchanging data between DEV1 and DEV2 during the channel time in which DirectionType is TWO_WAY. After receiving from the beacon the channel time allocation block 211 in which DEV1 that has sent the channel time request command 100 is designated by SrcID and DEV2 is designated by DestID, DEV1 first becomes a sender and transmits data to DEV2 at the designated time (S110). DEV2 sends an ACK frame in accordance with the ACK policy of the data frame received from DEV1. An Imm-ACK (Immediate ACK) policy is assumed in this example (S120). If DEV1 has no data to be sent at this time, DEV1 transmits a TOKEN frame to DEV2 (S130). The TOKEN frame is a frame in which only a MAC header but no frame body portion is present, the structure of which is shown in Figure 10a. If there were some frames to be sent in step S130, data frames would be sent instead of a TOKEN frame. If DEV2 has no data frame to be sent at the time when a TOKEN frame is received, another TOKEN frame is immediately transmitted (S140). After receiving the TOKEN frame in response to the previously sent TOKEN frame, DEV1 transmits data to DEV2 if there are any data to be sent to DEV2, or transmits a TOKEN frame again to DEV2 if there are no data (S150). When DEV2 receives a TOKEN frame again and other data are then ready to be sent to DEV1, a data frame, rather than a TOKEN frame are transmitted to DEV1 (S160). Since DEV1 received a data frame in response to the previously sent TOKEN frame, DEV1 sends DEV2 an Imm-ACK in response to the received data frame (S170). If DEV2 that received the Imm-ACK has further data, DEV2 continuously sends data. Otherwise, DEV2 sends a TOKEN frame to DEV1 (S180). The above process is repeated until the channel time allocated to the two DEVs ends.

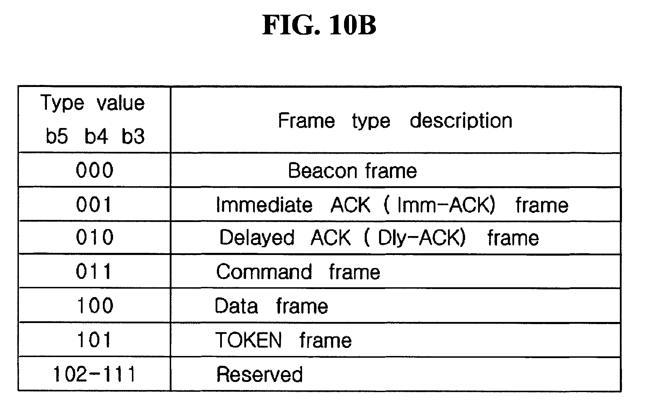

Figure 10A shows a detailed structure of the "TOKEN frame" proposed in the present invention. The TOKEN frame corresponds to a frame having only a MAC header and no frame body and has a size of 10 octets as in a conventional MAC header. Each field of the TOKEN frame has a size of 1 octet. Here, a Frame type field 710 is a field in which type values of the TOKEN frame are recorded. A table in which the type values of the various field frames are defined is shown in Figure 10B. These type values are recorded in b5, b4 and b3 bits of the MAC header and indicate what a relevant frame is according to the combination of the above bits. For example, "000" means a beacon frame and "001" means an Imm-ACK frame. Furthermore, a variety of type values such as a delayed ACK frame (value = "010"), a command frame (value = "011") and a data frame (value = "100") are specified in the existing IEEE 802.15.3. In the present invention, a new type value of a TOKEN frame is added and specified as "101."

Referring again to Figure 10A, type values of the ACK frame according to the ACK policy are recorded in an ACK policy field 720. According to IEEE 802.15.3, the type values of the ACK frame are recorded in b8 and b7 bits of the MAC header, wherein "No ACK" has a value of "00", "Immediate ACK" has a value of "01" and "Delayed ACK" has a value of "10". Therefore, the ACK policy field has a value of "00" in this embodiment. Further, the ID of a DEV for transmitting a relevant TOKEN frame is recorded in a DestID field 730, and the ID of a DEV for receiving the relevant TOKEN frame is recorded in a SrcID field 740. Moreover, all field values of the MAC header become "0."

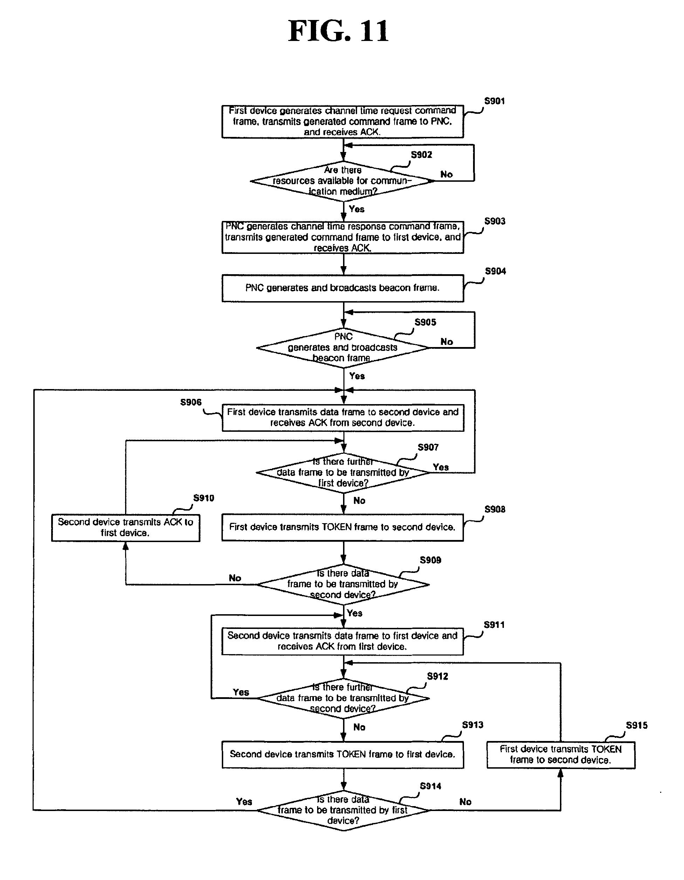

Figure 11 is a flowchart illustrating the overall operation of a second embodiment of the present invention.

First, a first device generates a channel time request command frame, transmits the generated command frame to PNC, and receives an ACK for the transmitted command frame (S901). To this end, MLME-CREATE-STREAM.request is generated in DME of the first device and then transmitted to MLME of the MAC. The MLME-CREATE-STREAM.request further includes a parameter of "DirectionType" in addition to the existing parameters, as defined in the above Table 1. The MLME generates a command frame used for requesting the channel time, i.e. a channel time request command frame, and then transmits the generated command frame to the PNC via a physical layer.

The PNC that received the command frame determines whether there are available resources in a current channel (wireless communication medium) (S902). If it is determined that there are no resources, a reason code of a channel time response command frame is properly expressed as "priority unsupported", "channel time unavailable", "unable to allocate as pseudo-static CTA" or the like, and the channel time response command frame is then transmitted to the first device. If it is determined that there are available resources, a command frame responding to the channel time request, i.e. the channel time response command frame with a reason code thereof expressed as "success", is transmitted to the first device and an Imm-ACK is then received from the first device (S903).

Next, the PNC generates a beacon frame based on information existing in the received channel time request command frame and then broadcasts the beacon frame to the DEVs that are members of the piconet (S904). The beacon frame includes information on channel time allocation, which in turn includes the duration of CTA, the location of CTA in a superframe, a stream index for data identification, the ID of the data transmitting device (the first device), the ID of the data receiving device (the second device), and a "DirectionType" for indicating whether the data transmission is unidirectional (ONE_WAY) or bi-directional (TWO_WAY). In this embodiment, the "DirectionType" is set to bi-directional, i.e. "1". The first and second devices that have received the beacon frame containing the DirectionType information can know that data are exchanged between them in a bidirectional manner.

Thereafter, when the start time of CTA at which the first and second devices can communicate with each other arrives ("Yes" in step S905), the first device transmits a data frame to the second device and then receives an Imm-ACK frame from the second device (S906). Since the data are segmented into unit frames having a length shorter than the maximum frame length and then transmitted, the data frame transmission procedure should be performed twice or more so as to transmit data longer than the frame unit. Further, additional frame transmission procedures should be performed in order to transfer additional data after the above data have been fully transmitted.

If there are no data frames to be transmitted by the first device ("No" in step S907) after the aforementioned data transmission procedures, the first device sends the second device a TOKEN frame indicating that there are no further data to be transmitted (S908). If the second device that received the TOKEN frame also has no data to be transmitted ("No" in step S909), the second device transmits an Imm-ACK to the first device (S910) and then returns to step S907. On the other hand, if there are any data ("Yes" in step S909), the second device transmits the data frames to the first device and receives an Imm-ACK from the first device (S911). Then, if there are further data to be transmitted by the second device ("Yes" in step S912), the data frame transmission step S911 is additionally performed. However, if there are no further data to be transmitted ("No" in step S912), the second device transmits a TOKEN frame to the first device (S913). Similarly, if the first device that received the TOKEN frame has data to be transmitted ("Yes" in step S914), the process returns to step S906. However, if there are no data, the first device transmits a TOKEN frame to the second device (S915) and the process then returns to step S912.

Steps S906 to S915 are performed from the start time to end time of the relevant CTA. Further, if the end time of the CTA arrives during any of the above steps, the process of Figure 11 is terminated.

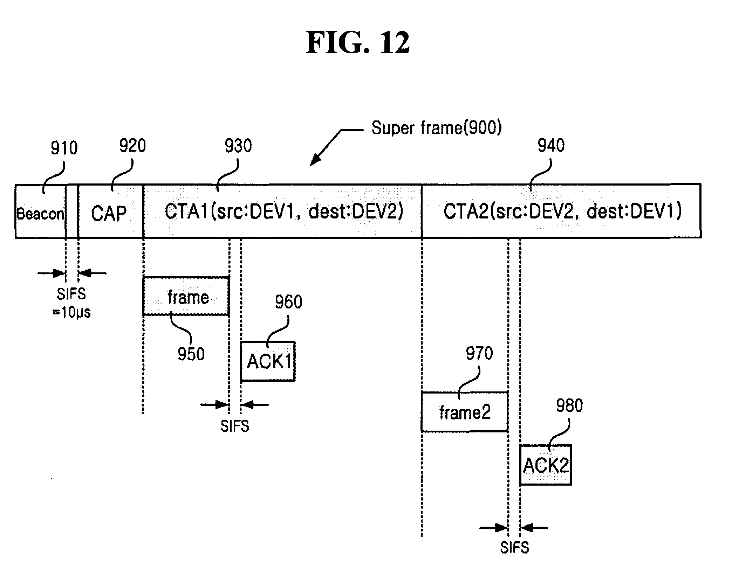

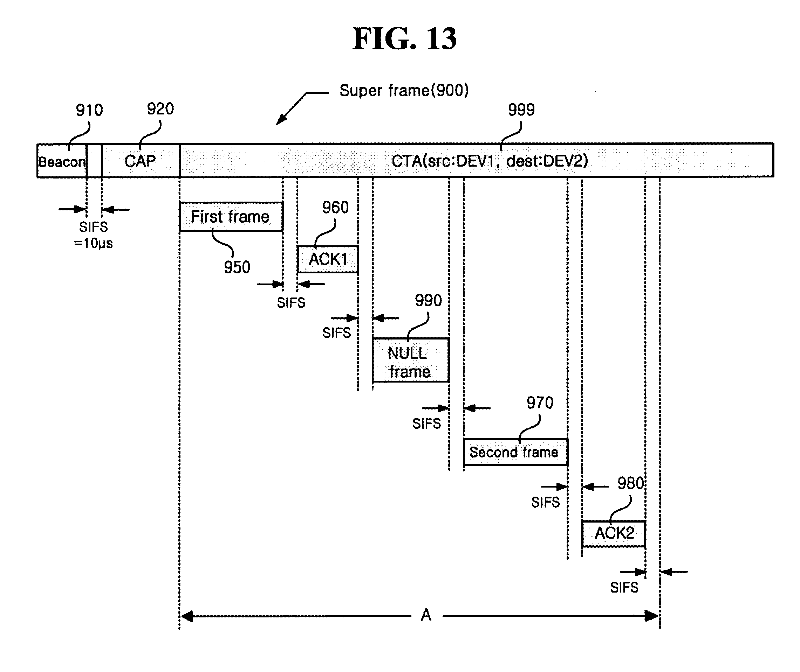

Hereinafter, a difference in transmission efficiency between unidirectional transmission in the CTA according to the prior art and bi-directional transmission in the CTA according to the present invention is compared with reference to Figures 12 and 13.

Figure 12 is a view showing the structure of a superframe 900 and a data transmission process when unidirectional transmission is made according to the prior art. When two devices DEV1 and DEV2 exist on a piconet and DEV1 attempts to transmit a stream to DEV2 using TCP/IP, a data frame is transmitted from DEV1 and DEV2 and an ACK frame for the data frame is transmitted from DEV2 to DEV1. It is assumed that an ACK policy for use in a MAC layer is an IMM-ACK policy, the superframe duration is 10ms, and CAP is 1ms. Further, it is also assumed that the transmission rate of a MAC header is 22Mbps and the transmission rate of a frame payload is 55Mbps.

If both DEV1 and DEV2 have requested a super-rate CTA with a rate factor of 1, the superframe 900 will be used as illustrated in Figure 12. It is now assumed that there are no information elements (IE) other than CTA IE and BSID IE in the superframe 900 as shown in Figure 12.

A beacon 910 is composed of a MAC header of 10 bytes, piconet synchronization parameters of 21 bytes, a CTA IE of 16 bytes (because this example has information on two CTAs), and a BSID IE 0f 20 bytes (it is assumed that the size of BSID is 10 bytes). As a result of the calculation in the following Table 3, it takes about 0.012ms to transmit the beacon so constructed.

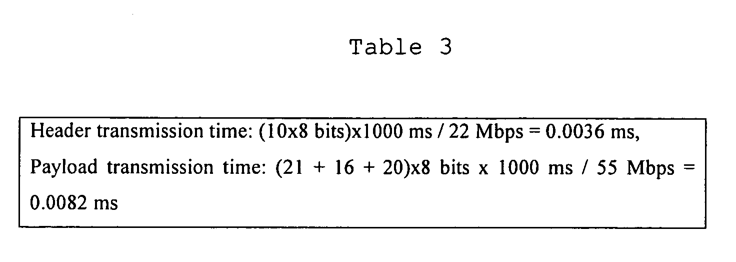

The transmission durations of CTA1 930 and CTA2 940 depend on the size of the TU (time unit) and the desired number of TUs that DEV1 and DEV2 request the PNC to send, respectively. The TU should transmit at least one frame according to the specified ACK policy. If the remaining time except for beacon transmission time and CAP 920 is allocated to each of DEVs, CTA1 930 in which the src DEV is DEV1 and the best DEV is DEV2 and the CTA2 940 in which the src DEV is DEV2 and the dest DEV is DEV1 will be allocated as illustrated in Figure 12 because it was assumed that both DEV1 and DEV2 have requested a super-rate CTA with a rate factor of 1. The durations of CTA1 930 and CTA2 940 can be changed according to the channel time allocation algorithm of the PNC and the TU requested by each DEV.

When the start time of CTA1 930 arrives, DEV1 first transmits a first frame 950 to DEV2. At this time, a payload of the first frame 950 is a data frame of the TCP/IP. Since a maximum frame length is 2048 bytes (except for the MAC header), the transmission time of the first frame 950 is 0.3014ms as illustrated in the following Table 4 if it is assumed that a length of the first frame 950 is 2048 bytes.

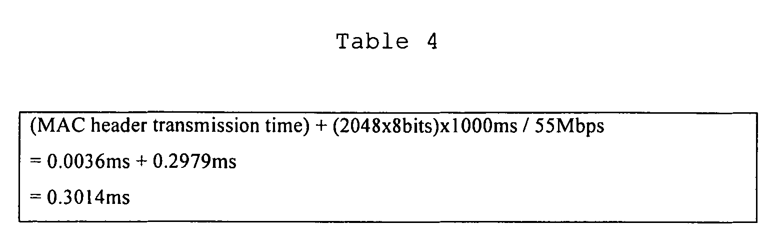

ACK1 960 is an ACK frame that is sent from DEV2 to DEV1 and transmitted according to the ACK policy of the MAC in the MAC layer. Since the ACK frame is composed of only a MAC header in IEEE 802.15.3, it will take 0.0036ms to transmit the ACK frame.

Since frames are transmitted through the TCP/IP in a higher layer of the MAC layer in this example, the DEV1 can no longer transmit a new frame if it does not receive the ACK frame of a TCP/IP level from DEV2. When DEV1 transmits a frame to DEV2 using TCP/IP, DEV2 should send an ACK frame for the transmitted frame. Since this ACK frame is transmitted in the higher layer of the MAC layer separately from an ACK (for example, the Imm-ACK) that is sent in the MAC layer, it will be processed in the same way as other data frames in view of the MAC layer. As shown in Figure 12, a second frame represents an ACK frame of the TCP/IP level which DEV2 transmits to DEV1. Even though DEV2 attempts to send the second frame to DEV1, DEV2 should wait until the channel time in which DEV2 itself is allocated as the src DEV. Accordingly, the second frame 970 can be transmitted only when the start time of CTA2 940 arrives. ACK2 980 is an ACK frame of a MAC layer level that will be transmitted according to the ACK policy of the MAC layer.

As described above, when the CTA system of the existing 802.15.3 is employed, one frame with the size of 2048 bytes is transmitted from DEV1 to DEV2 during the superframe of 10ms and vice versa.

Figure 13 is a view showing the structure of a superframe 900 and the data transmission process when bi-directional transmission is made according to the present invention. When DEV1 requests the PNC to allocate a channel time in which DirectionType is TWO_WAY, a relevant superframe is configured as shown in Figure 13. Similarly in Figure 12, it is also assumed that the whole remaining time except for the beacon transmission time and CAP 920 is allocated to the DEVs. The first frame 950 is a TCP/IP data frame that will be sent from DEV1 to DEV2 and the second frame 970 is an ACK frame of a TCP/IP level that will be sent from DEV2 to DEV1. It is also assumed that one NULL frame or TOKEN frame 990 has been transmitted between the first and second frames in consideration of a processing time consumed until the second frame 970 is transmitted. Then, the time taken from when one TCP/IP data frame is sent from DEV1 to DEV2 to when an ACK frame of a TCP/IP level for the data frame is received is calculated as illustrated in the following Table 5.

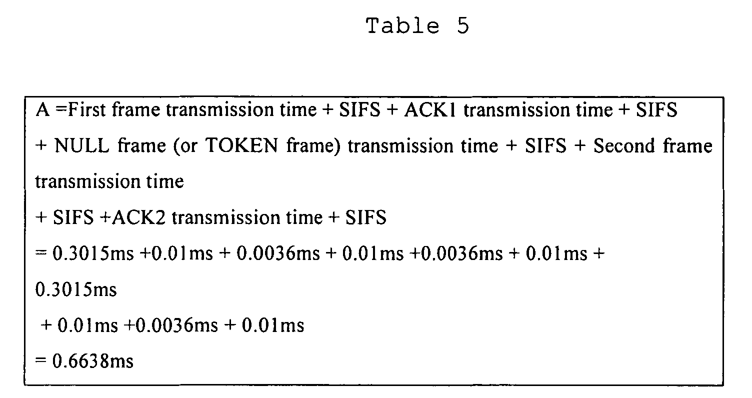

Accordingly, the result illustrated in the following Table 6 will be obtained by dividing a value, which is obtained by subtracting the beacon 910 transmission time and CAP 920 from the superframe 900 of 10ms, by the time A.

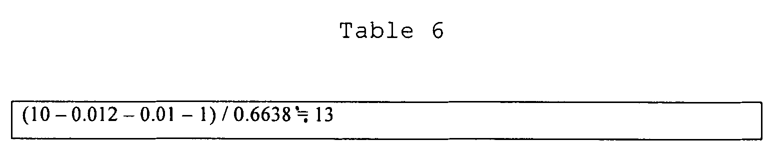

According to this result, DEV1 can send DEV2 13 frames, each of which has a size of 2048 bytes during a unit superframe and vice versa. Of course, if the channel time is requested to the PNC with a CTA rate factor designated as a number exceeding 1, more data than in Figure 12 can be transmitted. However, since the channel time allocation can be changed according to rate factors or the channel time allocation algorithm of the PNC, and it cannot be ensured that the maximum channel time can be always available, it is more efficient to employ a channel time having a DirectionType as proposed in the present invention.

Since a source device and a destination device are fixed in a channel time provided by the existing 802.15.3 MAC, only one device can send data during the channel time whereas the other device should merely receive the data. Therefore, as described above, it is not efficient to a protocol, such as TCP/IP, by which frames should be exchanged between devices. According to the present invention, such inefficiency can be reduced and overall transmission efficiency can thus be improved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for exchanging data between devices on a wireless personal area network (PAN), comprising:
(a) generating a channel time request frame (100) containing directional information (110) to determine whether data transmission is one of unidirectional and bi-directional, and transmitting the channel time request frame (100) to a device responsible for channel time allocation;
(b) generating a frame (200) containing channel time allocation information (210) including the directional information (110) based on information contained in the channel time request frame (100), and broadcasting the generated frame; and
(c) exchanging data between first and second devices, which are designated as source and destination devices in the frame (200) containing the channel time allocation information (210), during a predetermined channel time in accordance with the directional information (110).

2. The method as claimed in claim 1, wherein the channel time request frame (100) is a channel time request command frame specified in IEEE 802.15.3.

3. The method as claimed in claim 1 or 2, wherein a device responsible for the channel time allocation is a piconet coordinator (PNC) specified in IEEE 802.15.3.

4. The method as claimed in claim 1, 2 or 3, wherein the frame (200) containing the channel time allocation information (210) is a beacon frame specified in IEEE 802.15.3.

5. The method as claimed in any preceding claim, wherein the step (c) comprises:
transmitting data from the first device to the second device; and
transmitting a NULL frame to the second device when the first device has no further data to be transmitted after the data transmission.

6. The method as claimed in claim 5, wherein the step (c) further comprises:
transmitting the data to the first device if the second device that received the NULL frame has data to be transmitted to the first device; and
transmitting an acknowledgement (ACK) frame for the data transmitted by the first device if the second device has no data.

7. The method as claimed in claim 6, wherein the step (c) further comprises:
transmitting the data to the second device if the first device that received the ACK frame has data to be transmitted to the second device; and
transmitting the NULL frame to the second device if the first device has no data.

8. The method as claimed in claim 6 or 7, wherein the ACK frame is an intermediate ACK frame in a Media Access Control (MAC) layer.

9. The method as claimed in claim 5, 6, 7 or 8, wherein the NULL frame is composed only of a Media Access Control (MAC) header and has an immediate ACK policy.

10. The method as claimed in any preceding claim, wherein the step (c) comprises:
transmitting data from the first device to the second device; and
transmitting a first TOKEN frame to the second device when the first device has no further data to be transmitted after the data transmission.

11. The method as claimed in claim 10, wherein the step (c) further comprises:
transmitting the data to the first device if the second device that received the TOKEN frame has data to be transmitted to the first device; and
transmitting a second TOKEN frame for the data transmitted by the first device if the second device has no data.

12. The method as claimed in claim 11, wherein the step (c) further comprises:
transmitting the data to the second device if the first device that received the second TOKEN frame has data to be transmitted to the second device; and
transmitting the TOKEN frame to the second device if the first device has no data.

13. The method as claimed in claim 10, 11 or 12, wherein the first TOKEN frame is composed only of a Media Access Control (MAC) header, and has a No ACK policy.
